(19) **Europäisches Patentamt / European Patent Office / Office européen des brevets**

(11) **EP 4 748 564 A1**

(12) **EUROPEAN PATENT APPLICATION**
published in accordance with Art. 153(4) EPC

(43) Date of publication:
**27.05.2026 Bulletin 2026/22**

(21) Application number: **24843453.2**

(22) Date of filing: **15.07.2024**

(51) International Patent Classification (IPC):
**B32B 7/022** $^{(2019.01)}$        **B32B 38/00** $^{(2006.01)}$
**B32B 27/30** $^{(2006.01)}$        **B32B 27/36** $^{(2006.01)}$
**B32B 37/10** $^{(2006.01)}$

(52) Cooperative Patent Classification (CPC):
**B32B 7/022; B32B 27/30; B32B 27/36;
B32B 37/10; B32B 38/00**

(86) International application number:
**PCT/KR2024/010081**

(87) International publication number:
**WO 2025/018737 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.07.2023 KR 20230094875**

(71) Applicant: **LG CHEM, LTD.**
**Seoul 07336 (KR)**

(72) Inventors:
• **UM, Jun Geun**
  **Daejeon 34122 (KR)**

• **PARK, Jaeyong**
  **Daejeon 34122 (KR)**
• **KIM, Moonsoo**
  **Daejeon 34122 (KR)**
• **LEE, Chunhwa**
  **Daejeon 34122 (KR)**
• **JEONG, Moon Gon**
  **Daejeon 34122 (KR)**

(74) Representative: **Goddar, Heinz J.**
**Boehmert & Boehmert
Anwaltspartnerschaft mbB
Pettenkoferstrasse 22
80336 München (DE)**

(54) **GAS BARRIER MULTILAYER FILM**

(57)    A gas barrier multilayer film according to the present disclosure is biodegradable and, at the same time, has excellent gas barrier properties, and when applied to food packaging materials, it has the advantage of enabling long-term storage and distribution of food due to its excellent gas barrier properties. In addition, due to its characteristic of being biodegradable in soil and marine conditions, it can be utilized as a biodegradable eco-friendly packaging material.

**Description**

**[TECHNICAL FIELD]**

CROSS-REFERENCE TO RELATED APPLICATION(S)

This application claims the benefit of Korean Patent Application No. 10-2023-0094875 filed on July 20, 2023 in the Korean Intellectual Property Office, the disclosure of which is incorporated herein by reference in its entirety.
The present disclosure provides a multilayer film which is eco-friendly and has gas barrier properties.

**[BACKGROUND]**

Natural disasters which have been frequently occurring in recent years was made to recognize that the seriousness of environmental pollution and the climate change resulting therefrom are serious issues that must be addressed as a top priority. Among these, reduction of amount of use of disposable plastics is under the state in which any countries are pursuing a policy as an environmental pollution improvement activity capable of being practiced on a daily basis.
As part of this policy, the use of eco-friendly or biodegradable plastics is also recommended, and various plastics that can be biodegraded in soil or ocean are being researched and developed. However, in the case of food packaging which occupies a majority of plastic, it is essential to use materials that can block gases such as oxygen and moisture in order to prevent food from denaturing during distribution and preserve it for a long time, and in the case of these gas barrier materials, most of them are petrochemical-based and cannot be biodegraded. Therefore, in order to realize eco-friendly food packaging materials applying biodegradable materials, food packaging companies generally add a metal layer to impart barrier properties, or preferentially apply biodegradable plastic materials to products that do not require barrier properties.
Therefore, the present disclosure relates to a multilayer film capable of blocking oxygen and moisture based on PGA (poly(glycolic acid)), which is one of biodegradable polymer materials, and confirmed that biodegradable food packaging is possible through such a multilayer film, thereby completing the present disclosure.

**[DETAILED DESCRIPTION OF THE INVENTION]**

**[Technical Problem]**

It is an object of the present disclosure to provide a multilayer film which is eco-friendly and has gas barrier properties.
It is another object of the present disclosure to provide a method for manufacturing a gas barrier multilayer film.

**[Technical Solution]**

In order to achieve the above object, according to the present disclosure, there is provided a gas barrier multilayer film as follow.
A gas barrier multilayer film comprising a substrate layer (Ts); and a gas barrier layer (Tb) formed on the substrate layer,

wherein the gas barrier layer (Tb) comprises 40 to 60 vol% of poly(glycolic acid) (PGA) based on the total volume of the gas barrier layer, and
the gas barrier multilayer film satisfies the following Mathematical Formula 1:

$$[\text{Mathematical Formula 1}]$$
$$0.38 \le D(Tb)/D(Ts) < 4.89$$

in Mathematical Formula 1,
D(Tb) is the thickness of the gas barrier layer, and
D(Ts) is the thickness of the substrate layer.

The gas barrier multilayer film of the present disclosure comprises at least two layers, and comprises a substrate layer (Ts); and a gas barrier layer (Tb) formed on the substrate layer. Among these, the gas barrier layer (Tb) comprises poly(glycolic acid) (PGA) as a biodegradable polymer, thereby making it biodegradable and eco-friendly, and the gas barrier layer and the substrate layer complement each other to exhibit excellent gas barrier properties.

The present disclosure will be described in detail below.

The term "gas barrier layer (Tb)" as used herein means a layer containing 40 to 60 vol% of poly(glycolic acid) (PGA) based on the total volume of the gas barrier layer. The poly(glycolic acid) is a biodegradable polymer, so that the gas barrier multilayer film according to the present disclosure can be used in an eco-friendly manner. If the content of the poly(glycolic acid) included in the gas barrier layer is less than 40 vol%, it is difficult to realize an effective gas barrier effect, and if the content of the poly(glycolic acid) included in the gas barrier layer exceeds 60 vol%, there is a problem that the melt processability is reduced and the decomposition phenomenon of the poly(glycolic acid) is aggravated during processing.

Preferably, the weight average molecular weight (Mw) of the poly(glycolic acid) is 80,000 to 220,000. When the weight average molecular weight of the poly(glycolic acid) is less than 80,000, there may be a problem that extrusion molding is difficult due to low melt viscosity, and the mechanical properties of the molded product, such as a molded film, are not sufficient. In addition, when the weight average molecular weight is higher than 220,000, the poly(glycolic acid) may discolor significantly, which may cause an appearance problem of the molded product, such as a film, and more energy may be required for melt processing, making efficient processing difficult. More preferably, the weight average molecular weight (Mw) of the poly(glycolic acid) is 100,000 to 200,000.

Preferably, the molecular weight distribution (polydispersity Index, PDI) of the poly(glycolic acid) is 1.5 to 4.5. The molecular weight distribution of the poly(glycolic acid) is an important factor in the production of poly(glycolic acid), and when the molecular weight distribution is less than 1.5, precise control of polymerization conditions is required, which may cause difficulties in economical product production. In addition, when the molecular weight distribution of the poly(glycolic acid) is greater than 4.5, there may be a problem that decomposition is accelerated during melt processing due to low molecular weight poly(glycolic acid). More preferably, the molecular weight distribution of the poly(glycolic acid) is 2.0 to 4.0.

The gas barrier layer may include various polymers in addition to poly(glycolic acid), and preferably includes poly(butylene adipate-co-terephthalate) (PBAT). More preferably, the gas barrier layer includes poly(glycolic acid) and poly(butylene adipate-co-terephthalate), and includes them in an amount of 40 to 60 vol% and 60 to 40 vol%, respectively, based on the total volume of the gas barrier layer. Preferably, the weight average molecular weight of the poly(butylene adipate-co-terephthalate) is 90,000 to 180,000. If the weight average molecular weight of the poly(butylene adipate-co-terephthalate) is less than 90,000, there may be a problem that the mechanical properties of the produced film may be significantly deteriorated, and difficulties may occur in processes such as film molding due to low melt viscosity. If the weight average molecular weight of the poly(butylene adipate-co-terephthalate) is greater than 180,000, it may be difficult to effectively melt the resin in the extrusion molding process.

The term "substrate layer (Ts)" as used herein serves to support the gas barrier layer, wherein the gas barrier layer is formed on the substrate layer. Preferably, the substrate layer is made of biodegradable polyester or a mixture thereof. Examples of the biodegradable polyester include poly(butylene adipate-co-terephthalate) (PABT), polylactic acid (PLA), and polybutylene succinate (PBS). Preferably, the weight average molecular weight of the poly(butylene adipate-co-terephthalate) is 90,000 to 180,000, the weight average molecular weight of the polylactic acid is 110,000 to 190,000, and the weight average molecular weight of the polybutylene succinate is 120,000 to 200,000.

In particular, the gas barrier multilayer film according to the present disclosure is characterized by satisfying the above Mathematical Formula 1. The Mathematical Formula 1 means the ratio of the thickness between the gas barrier layer and the substrate layer, and is expressed as "D(Tb)/D(Ts)". If the D(Tb)/D(Ts) value is less than 0.38, the thickness of the gas barrier layer is made into a very thin film during melt processing, which may cause a problem of significant deterioration of the gas barrier properties. In addition, if the D(Tb)/D(Ts) value is 4.89 or more, there is a problem that the thickness of the substrate layer is made into a thin film at a considerable level, which significantly reduces the melt adhesive strength between films, making it difficult to produce packaging materials. In the case of the gas barrier layer, there may be a problem that it is difficult to realize an economically appropriate gas barrier layer due to the problem of being made into a thick film.

On the other hand, the thickness of the gas barrier layer is 10 to 500 $\mu$m. In addition, the thickness of the substrate layer is 8 to 450 $\mu$m.

Preferably, the gas barrier multilayer film according to the present disclosure satisfies the following Mathematical Formula 2:

[Mathematical Formula 2]

$$0.01 \leq OTR(Tb)/OTR(Ts) \leq 0.52$$

in Mathematical Formula 2,

OTR(Tb) is the oxygen transmission rate of the gas barrier layer, and
OTR(Ts) is the oxygen transmission rate of the substrate layer.

The Mathematical Formula 2 means the ratio of the oxygen permeability between the gas barrier layer and the substrate layer, and is expressed as "OTR(Tb)/OTR(Ts)". The unit of the oxygen permeability is "cc/m$^2$·day·kPa", and the measurement method thereof is specifically described in the Examples provided hereinafter. If the OTR(Tb)/OTR(Ts) value is less than 0.01, there is a problem that it is difficult to realize a multilayer film due to a decrease in the mechanical properties of the gas barrier layer, and if the OTR(Tb)/OTR(Ts) value is greater than 0.52, there is a problem that the substrate layer is peeled off during deformation of the multilayer film due to the substrate layer being made into a thin film, and the it is difficult to realize an economically effective gas barrier layer due to excessive thickening of the gas barrier layer.

Preferably, the gas barrier multilayer film according to the present disclosure satisfies the following Mathematical Formula 3:

$$[\text{Mathematical Formula 3}]$$

$$0.014 \leq WVTR(Tb)/WVTR(Ts) \leq 0.61$$

in Mathematical Formula 3,

WVTR(Tb) is the water vapor transmittance rate of the gas barrier layer, and
WVTR(Ts) is the water vapor transmittance rate of the substrate layer.

The Mathematical Formula 3 means the ratio of the water vapor transmittance between the gas barrier layer and the substrate layer, and is expressed as "WVTR(Tb)/WVTR(Ts)". The unit of the water vapor transmittance is "g/m$^2$.day", and the measurement method thereof is specifically described in the Examples provided hereinafter. If the WVTR(Tb)/WVTR(Ts) value is less than 0.014, there is a problem that it is difficult to realize a multilayer film due to a decrease in the mechanical properties of the gas barrier layer, and if the WVTR(Tb)/WVTR(Ts) value is greater than 0.61, there may be a problem that , similar to the oxygen permeability mentioned above, the substrate layer is peeled off during deformation of the multilayer film due to the substrate layer being made into a thin film, and that it is difficult to realize an economically effective gas barrier layer due to the excessive thickening of the gas barrier layer.

On the other hand, the gas barrier multilayer film according to the present disclosure may further include various layers as necessary in addition to the substrate layer and gas barrier layer described above. That is, the gas barrier multilayer film according to the present disclosure may further include an additional substrate layer, an additional gas barrier layer, or an inorganic layer. For example, on the gas barrier multilayer film including the substrate layer and the gas barrier layer, an additional substrate layer may be included for protecting the gas barrier layer, or a substrate layer and a gas barrier layer may be further included to further enhance the gas barrier effect, or an inorganic layer may be added for the purpose of improving the print visibility of the packaging material or improving the slip properties of a film, thereby preventing film roll blocking. These examples are schematically represented as follows. At this time, the substrate layer and the gas barrier layer are as described above, and the inorganic layer means TiO$_2$, aluminum oxide, silicon oxide, etc.

- substrate layer/gas barrier layer/substrate layer
- substrate layer/gas barrier layer/inorganic layer/substrate layer
- substrate layer/gas barrier layer/substrate layer/gas barrier layer
- substrate layer/gas barrier layer/substrate layer/gas barrier layer/substrate layer

In addition, according to the present disclosure, there is provided a method for manufacturing a gas barrier multilayer film according to the present disclosure, the method comprising: a step 1 of producing a substrate layer and a gas barrier layer film respectively; and a step 2 of laminating each film produced in step 1.

In the step 1, the gas barrier multilayer film can be produced by melting the components constituting the substrate layer and the gas barrier layer to produce a film, and for example, it can be produced by a blown film process. In the step 2, the gas barrier multilayer film can be produced by laminating each film produced in the above step 1 and then laminating it using a hot press or the like.

[Advantageous Effects]

As set forth above, a gas barrier multilayer film according to the present disclosure is biodegradable and, at the same time, has excellent gas barrier properties, and when applied to food packaging materials, it has the advantage of enabling long-term storage and distribution of food due to its excellent gas barrier properties. In addition, due to its characteristic of being biodegradable in soil and marine conditions, it can be utilized as a biodegradable eco-friendly packaging material.

**[DETAILED DESCRIPTION OF THE EMBODIMENTS]**

Hereinafter, exemplary embodiments of the present disclosure will be described in more detail with reference to the following examples. However, the following examples are provided for illustrative purposes only, and the scope of the present disclosure is not intended to be limited thereby.

**Production Example**

Respective polymer blends were produced in the ratios shown in Table 1 below, using a Co-rotating Intermeshing Twin Screw Extruder (BA-19, Bautek) having a screw diameter of 19 mm, an aspect ratio (L/D, Length/Diameter) of 40, and 7 Heating Barrel.

Specifically, the barrel temperature was sequentially set from 180 °C to 230 °C at 20 °C intervals, and the strand extruded under conditions of 200 rpm and 3 kg/hr feeding was cooled in a 20 °C water bath and passed through a pelletizer to produce a polymer blend pellet.

In the case of composition #8, the polymer blend pellet was produced under the same conditions, except that the barrel temperature was sequentially set from 140 °C to 190 °C at 20 °C intervals. At this time, Joncryl ADR 4401 (BASF) was used as a compatibilizer to increase compatibility between resins, and 1.0 phr was added to compositions #1 to #7, #9 and #10, and 0.1 phr was added to composition #8, respectively.

In addition, 0.1 phr of PEP 36 (ADEKA) as a pentaerythritol-based antioxidant was added to compositions #1 to #7, #9 and #10 to improve thermal stability. In addition, in order to produce a polymer composite containing inorganic substances, 30 wt.% of $TiO_2$ (Sigma Aldrich) was added to poly(butylene adipate-co-terephthalate) (PABT) under the conditions of sequentially setting the barrel temperature from 140 °C to 190 °C at 20 °C intervals, 200 rpm, and 3 kg/hr feeding.

[Table 1]

| Polymer | Product name (Manufa cturer) | Composition (vol%) | | | | | | | | | | |
|---|---|---|---|---|---|---|---|---|---|---|---|---|
| | | #1 | #2 | #3 | #4 | #5 | #6 | #7 | #8 | #9 | #10 | #11 |
| PGA | MI15 (Samya ng) | 100 | 65.6 | 55.1 | 45.0 | 35.3 | 17.0 | 0 | - | - | 55.1 | 55.1 |
| PBAT | Ecoflex C1200 (BASF) | 0 | 34.4 | 44.9 | 55.0 | 64.7 | 83.0 | 100 | 80 | - | - | - |
| PLA | 4032D (Nature Works) | - | - | - | - | - | - | - | 20 | - | - | - |
| PBS | FZ79AC (PTT-MCC) | - | - | - | - | - | - | - | - | 100 | - | - |
| PET | SKYPE T BL8050 (SK Chemic als) | - | - | - | - | - | - | - | - | - | 44.9 | - |
| PBT | KH2100 A (HENGL I) | - | - | - | - | - | - | - | - | - | - | 44.9 |

**Example and Comparative Example**

For each composition produced in the Production Example, a film with a thickness of 30 μm was produced under the conditions of 230 °C, 60 rpm, and BUR (Blow-up Ratio) 1.3 using a blown film machine (30 mm Air Die, Collin). However, for the composition #8 and the inorganic composite, a film with a thickness of 30 μm was produced under the conditions of 170 °C, 60 rpm, and BUR (Blow-up Ratio) 1.3.

The produced film was laminated with the configurations shown in Table 2 and Table 3 below, and then a multilayer film was produced using a Hot Press (Wabash, US) under the conditions of 40 °C, 5 MPa, and 6 minutes.

The evaluations below were performed on each produced multilayer film, and are shown in Tables 2 to 4 below.

(1) Oxygen Transmittance Rate (OTR)

For each film, the Oxygen Transmittance Rate (OTR) was measured for 2 days using the OTR (Oxygen Transmittance Rate) device from Systech Illinois at a temperature of 23 °C and $\Delta$P of 1 atm.

(2) Water Vapor Transmittance Rate (WVTR)

For each film, the Water Vapor Transmittance Rate(WVTR) was measured for 2 days using the AquaSense 7101 WVTR (Water Vapor Transmittance Rate) device from Systech Illinois at a temperature of 37.8 °C and a relative humidity of 90%. When the oxygen transmission rate of each film was measured at a high level of 100 $cc/m^2$.day.kPa or higher, the water vapor transmittance rate was not measured.

[Table 2]

| Item | Ex.1 | Ex. 2 | Ex. 3 | Ex. 4 | Ex. 5 | Ex. 6 |
|---|---|---|---|---|---|---|
| Layer Number | 2 | 2 | 2 | 2 | 2 | 2 |
| Layer 1 | #3 | #3 | #3 | #4 | #4 | #4 |
| Layer 2 | #8 | #7 | #9 | #8 | #7 | #9 |
| OTR($cc/m^2$ .day.kPa) | 3 | 4 | 2 | 4 | 5 | 4 |
| WVTR(g/ $m^2$.day) | 4 | 4 | 3 | 6 | 6 | 4 |

[Table 3]

| Item | Compa rative Ex. 1 | Compa rative Ex. 2 | Compa rative Ex. 3 | Compa rative Ex. 4 | Compa rative Ex. 5 | Compa rative Ex. 6 | Comparati ve Ex. 7 | Comparati ve Ex. 8 |
|---|---|---|---|---|---|---|---|---|
| Layer Numbe r | 1 | 1 | 1 | 1 | 1 | 2 | 2 | 2 |
| Layer 1 | #3 | #6 | #7 | #8 | #9 | #7 | #10 | #11 |
| Layer 2 | - | - | - | - | - | #3 | #8 | #8 |
| OTR ($cc/m^2$. day.kP a) | 15 | 103 | 109 | 117 | 29 | 20 | Failure[1] | Failure |
| WVTR (g/$m^2$.d ay) | 16 | - | - | - | 33 | 24 | Failure | Failure |
| 1) Failure: The compatibility between polymers decreased, and film production was not possible. | | | | | | | | |

[Table 4]

| Item | Ex. 7 | Ex. 8 | Ex. 9 | Ex. 10 | Comparati ve Ex. 9 | Comparati ve Ex.10 |
|---|---|---|---|---|---|---|
| Layer Number | 3 | 4 | 5 | 6 | 3 | 3 |
| Layer 1 | #9 | #9 | #9 | #9 | #9 | #8 |
| Layer 2 | #3 | Inorganic layer | #3 | Inorganic layer | #8 | #9 |
| Layer 3 | #8 | #3 | #8 | #3 | #9 | #8 |
| Layer 4 | - | #8 | #3 | #8 | - | - |
| Layer 5 | - | - | #8 | #3 | - | - |
| Layer 6 | - | - | - | #8 | - | - |
| OTR ($cc/m^2$.day .kPa) | 3 | 2 | < 1 | < 1 | 21 | 44 |
| WVTR (g/$m^2$.day) | 4 | 2 | 1 | < 1 | 22 | 51 |

**Claims**

1. A gas barrier multilayer film comprising a substrate layer (Ts); and a gas barrier layer (Tb) formed on the substrate layer,

    wherein the gas barrier layer (Tb) comprises poly(butylene adipate-co-terephthalate) and poly(glycolic acid), and comprises 40 to 60 vol% of poly(glycolic acid) based on a total volume of the gas barrier layer, and
    the gas barrier multilayer film satisfies the following Mathematical Formula 1:

$$[Mathematical\ Formula\ 1]$$

$$0.38 \leq D(Tb)/D(Ts) < 4.89$$

    wherein in Mathematical Formula 1,
    D(Tb) is the thickness of the gas barrier layer, and
    D(Ts) is the thickness of the substrate layer.

2. The gas barrier multilayer film according to claim 1, wherein:

    the gas barrier multilayer film satisfies the following Mathematical Formula 2:

$$[Mathematical\ Formula\ 2]$$

$$0.01 \leq OTR(Tb)/OTR(Ts) \leq 0.52$$

    wherein in Mathematical Formula 2,
    OTR(Tb) is the oxygen transmission rate of the gas barrier layer, and
    OTR(Ts) is the oxygen transmission rate of the substrate layer.

3. The gas barrier multilayer film according to claim 1, wherein:

    the gas barrier multilayer film satisfies the following Mathematical Formula 3:

$$[Mathematical\ Formula\ 3]$$

$$0.014 \leq WVTR(Tb)/WVTR(Ts) \leq 0.61$$

    wherein in Mathematical Formula 3,
    WVTR(Tb) is the water vapor transmittance rate of the gas barrier layer, and
    WVTR(Ts) is the water vapor transmittance rate of the substrate layer.

4. The gas barrier multilayer film according to claim 1, wherein:
    the gas barrier layer comprises poly(glycolic acid) and poly(butylene adipate-co-terephthalate) in an amount of 40 to 60 vol% and 60 to 40 vol%, respectively, based on the total volume of the gas barrier layer.

5. The gas barrier multilayer film according to claim 1, wherein:
    the substrate layer is made of a biodegradable polyester or a mixture thereof.

6. The gas barrier multilayer film according to claim 5, wherein:
    the biodegradable polyester is poly(butylene adipate-co-terephthalate) (PABT), polylactic acid (PLA), or polybutylene succinate (PBS).

7. The gas barrier multilayer film according to claim 1, wherein:
    the thickness of the gas barrier layer is 5 to 50 $\mu$m.

8. The gas barrier multilayer film according to claim 1, wherein:
    the thickness of the substrate layer is 5 to 60 $\mu$m.

9. The gas barrier multilayer film according to claim 1, wherein:
   the gas barrier multilayer film further comprises an additional substrate layer, an additional gas barrier layer, or an inorganic layer.

## INTERNATIONAL SEARCH REPORT

| International application No. |
|---|
| **PCT/KR2024/010081** |

| A. | CLASSIFICATION OF SUBJECT MATTER |
|---|---|

**B32B 7/022**(2019.01)i; **B32B 38/00**(2006.01)i; **B32B 27/30**(2006.01)i; **B32B 27/36**(2006.01)i; **B32B 37/10**(2006.01)i

According to International Patent Classification (IPC) or to both national classification and IPC

| B. | FIELDS SEARCHED |
|---|---|

Minimum documentation searched (classification system followed by classification symbols)

B32B 7/022(2019.01); B32B 27/06(2006.01); B32B 27/20(2006.01); B32B 27/30(2006.01); B32B 27/36(2006.01); C08J 7/04(2006.01); C08L 67/02(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기재층(substrate layer), 기체차단층(gas barrier layer), 폴리글리콜산(polyglycolic acid, PGA), 폴리(부틸렌 아디페이트-co-테레프탈레이트)(poly(butylene adipate-co-terephthalate), PBAT), 다층 필름 (multilayer film)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113500837 A (UNISUPPLY INDUSTRIES (SUZHOU) CO., LTD.) 15 October 2021 (2021-10-15)<br>See paragraph [0007]; claim 1; and figure 1. | 1-9 |
| Y | CN 113956636 A (BEIJING TECHNOLOGY AND BUSINESS UNIVERSITY) 21 January 2022 (2022-01-21)<br>See abstract; and claim 1. | 1-9 |
| Y | KR 10-2382498 B1 (TIPA CORP. LTD.) 01 April 2022 (2022-04-01)<br>See paragraphs [0010] and [0023]-[0056]; and claims 1, 4 and 9. | 1-9 |
| A | JP 5620190 B2 (KUREHA CORP.) 05 November 2014 (2014-11-05)<br>See paragraph [0038]; and claims 1-5. | 1-9 |
| A | KR 10-2023-0062750 A (POLYONE CO., LTD.) 09 May 2023 (2023-05-09)<br>See claims 1-21; and figure 1. | 1-9 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2024** | **16 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/010081** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 112959782 A (XIAMEN AMESON NEW MATERIAL TECHNOLOGY CO., LTD.) 15 June 2021 (2021-06-15)<br>See claims 1-10. | 1-9 |

Form PCT/ISA/210 (second sheet) (July 2022)

**INTERNATIONAL SEARCH REPORT**
Information on patent family members

International application No.

**PCT/KR2024/010081**

| Patent document cited in search report | | | Publication date (day/month/year) | Patent family member(s) | | | Publication date (day/month/year) |
|---|---|---|---|---|---|---|---|
| CN | 113500837 | A | 15 October 2021 | None | | | |
| CN | 113956636 | A | 21 January 2022 | None | | | |
| KR | 10-2382498 | B1 | 01 April 2022 | AU | 2014-338515 | A1 | 09 June 2016 |
| | | | | AU | 2014-338515 | B2 | 14 December 2017 |
| | | | | CA | 2928718 | A1 | 30 April 2015 |
| | | | | CA | 2928718 | C | 16 July 2019 |
| | | | | CN | 105916919 | A | 31 August 2016 |
| | | | | EP | 3060601 | A1 | 31 August 2016 |
| | | | | EP | 3060601 | B1 | 06 January 2021 |
| | | | | ES | 2857200 | T3 | 28 September 2021 |
| | | | | HR | P20210337 | T1 | 25 June 2021 |
| | | | | IL | 245229 | B | 27 February 2020 |
| | | | | IL | 272726 | A | 30 April 2020 |
| | | | | IL | 272726 | B | 30 November 2020 |
| | | | | IL | 278529 | B | 01 January 2022 |
| | | | | JP | 2016-537495 | A | 01 December 2016 |
| | | | | NZ | 720429 | A | 28 May 2021 |
| | | | | PL | 3060601 | T3 | 26 July 2021 |
| | | | | PT | 3060601 | T | 12 March 2021 |
| | | | | SG | 11201603324 | A | 30 May 2016 |
| | | | | US | 10239292 | B2 | 26 March 2019 |
| | | | | US | 10647093 | B2 | 12 May 2020 |
| | | | | US | 11007758 | B2 | 18 May 2021 |
| | | | | US | 2016-0257098 | A1 | 08 September 2016 |
| | | | | US | 2019-0152203 | A1 | 23 May 2019 |
| | | | | US | 2020-0290327 | A1 | 17 September 2020 |
| | | | | WO | 2015-059709 | A1 | 30 April 2015 |
| JP | 5620190 | B2 | 05 November 2014 | JP | 2012-040688 | A | 01 March 2012 |
| KR | 10-2023-0062750 | A | 09 May 2023 | KR | 10-2682259 | B1 | 05 July 2024 |
| CN | 112959782 | A | 15 June 2021 | CN | 112959782 | B | 10 February 2023 |

Form PCT/ISA/210 (patent family annex) (July 2022)

**EP 4 748 564 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230094875